# EUROPÄISCHE PATENTANMELDUNG

(11) **EP 4 707 737 A1**
(43) Veröffentlichungstag der Anmeldung: **11.03.2026**
(21) Anmeldenummer: 25191458.6
(22) Anmeldetag: 24.07.2025
(51) Int. Cl.: G01C 21/16, G01C 25/00, G01S 13/88, G01V 3/15

(54) **ORTUNGSSYSTEM ZUR BESTIMMUNG VON RELATIVPOSITIONSINFORMATIONEN**

(30) Priorität: 21.08.2024 DE 102024207906
(71) Anmelder: Robert Bosch GmbH, 70442 Stuttgart (DE)
(72) Erfinder: Sgarz, Heiko, 71229 Leonberg (DE); Eichel, Dirk, 74321 Bietigheim-Bissingen (DE); Brosi, Jan-Michael, 70771 Leinfelden-Echterdingen (DE)

(57) **Zusammenfassung**

Die Erfindung betrifft ein Ortungssystem 100 zur Bestimmung von Relativpositionsinformationen bezüglich einer Relativposition des Ortungssystems 100 zu einem unter einer Untersuchungsoberfläche 150 befindlichen zu ortenden Objekt 160, wobei das Ortungssystem 100 einen Ortungssensor 110, einen Orientierungssensor 120 und eine Auswerteeinrichtung 140 aufweist, wobei der Ortungssensor 110 eingerichtet ist, ein erstes Signal bereitzustellen, das sich mit einer Änderung eines Abstands 180 zwischen dem Ortungssystem 100 und dem Objekt 160 ändert, und der Orientierungssensor 120 eingerichtet ist, ein zweites Signal bereitzustellen, das sich mit einer Änderung einer Bewegungsrichtung 105 des Ortungssystems 100 zu einer Umgebung 101 des Ortungssystems 100 ändert, wobei die Auswerteeinrichtung 140 eingerichtet ist, die Relativpositionsinformationen bezüglich der Relativposition des Ortungssystems 100 zu dem Objekt 160 unter Berücksichtigung des ersten Signals und des zweiten Signals zu bestimmen.

## Beschreibung

### Technisches Gebiet

Die vorliegende Erfindung betrifft das Gebiet der Ortungsgeräte und betrifft ein Ortungssystem zur Bestimmung von Relativpositionsinformationen sowie ein Verfahren zur Bestimmung von Relativpositionsinformationen.

### Stand der Technik

Aus dem Stand der Technik sind Ortungsgeräte bekannt, die zur Ortung von nicht sichtbaren Objekten innerhalb von Wänden, Decken und/oder Böden dienen und die ein Objekt in einem mehr oder weniger großen Bereich um ein Zentrum des Objektes (Objektzentrum) herum anzeigen können (Objekt-Anzeigebereich). Innerhalb des Objektanzeigebereichs kann z. B. durch eine Verwendung eines Sensorarrays oder durch unterschiedliche Sensorausrichtungen und/oder Sensoranregungen eine zusätzliche Anzeige realisiert werden, in welcher Richtung sich das Objektzentrum befindet. Auch besteht eine bekannte Möglichkeit darin, zusätzlich zu einem Ortungssensor zum Orten des Objektes präzise Wegsensoren zur Bestimmung eines zurückgelegten Weges einzusetzen, um die Richtung des Objektzentrums zu bestimmen. Die bekannten Geräte, die eine solche Richtungsanzeige realisieren, haben durchweg den Nachteil, dass sie komplex, fehleranfällig und/oder in der Herstellung mit hohen Kosten verbunden sind.

So beschreibt die WO 2015/197790 A2 ein Ortungssystem mit einer Ortungsvorrichtung, die dazu vorgesehen ist, Ortungsdaten zu unter einer Untersuchungsoberfläche verborgenen Ortungsobjekten zu erfassen, mit einem Positionssensor zur Erfassung von Positionsdaten der Ortungsvorrichtung bezogen auf die Untersuchungsoberfläche. Es wird beschrieben, dass das Ortungssystem zumindest eine Auswertevorrichtung aufweist, die dazu vorgesehen ist, zumindest in einem ersten Betriebsmodus des Ortungssystems eine richtungs- und/oder ortsaufgelöste Ortungsinformation aus den Ortungsdaten ohne Umpositionieren der Ortungsvorrichtung bezogen auf die Untersuchungsoberfläche zu bestimmen und in einem zweiten Betriebsmodus eine zumindest dreidimensionale Ortungsinformation aus den Ortungsdaten und den Positionsdaten durch Zuordnung von Ortungsdaten zu Positionsdaten zu bestimmen.

### Offenbarung der Erfindung

Die vorliegende Erfindung offenbart ein Ortungssystem zur Bestimmung von Relativpositionsinformationen bezüglich einer Relativposition des Ortungssystems zu einem unter einer Untersuchungsoberfläche befindlichen zu ortenden Objekt sowie ein Verfahren zur Bestimmung von entsprechenden Relativpositionsinformationen.

Gemäß einem ersten Aspekt wird ein Ortungssystem zur Bestimmung von Relativpositionsinformationen bezüglich einer Relativposition des Ortungssystems zu einem unter einer Untersuchungsoberfläche wie einer Wandoberfläche befindlichen zu ortenden Objekt (Ortungsobjekt) vorgeschlagen, wobei es sich bei dem Ortungssystem insbesondere um ein handgehaltenes Ortungsgerät handeln kann.

Ein Ortungssystem im Sinne der vorliegenden Erfindung ist eine Vorrichtung, die es ermöglicht, typischerweise nicht sichtbare Objekte innerhalb von Wänden, Decken und/oder Böden zu orten. Bei diesen Objekten kann es sich beispielsweise um Gas-, Wasser- oder Stromleitungen, Bewehrungsstahl oder Ständerkonstruktionen handeln. Ein Ortungsgerät im Sinne der vorliegenden Erfindung ist ein Ortungssystem, das zur direkten Benutzung durch einen menschlichen Benutzer (im Folgenden auch kurz als Benutzer bezeichnet) geeignet ist, indem es geeignete Ein- und Ausgabeelemente und vorzugsweise ein Gehäuse umfasst. Bei einem Ortungsgerät stellt das gesamte Ortungsgerät ein Ortungssystem im Sinne der Erfindung dar, aber auch das Ortungsgerät abzüglich der Ein- und Ausgabeelemente und eines eventuell vorhandenen Gehäuses ist ein Ortungssystem. Ein erfindungsgemäßes Ortungssystem ist bevorzugt ein tragbares und/oder ein handgehaltenes Ortungsgerät. Ein erfindungsgemäßes Ortungssystem oder ein Teil eines erfindungsgemäßen Ortungssystems wird zur Bestimmung von Relativpositionsinformationen typischerweise über eine Untersuchungsoberfläche bewegt, unter der ein oder mehrere Ortungsobjekte verborgen sind.

Das Ortungssystem umfasst einen Ortungssensor, einen Orientierungssensor und eine Auswerteeinrichtung. Ortungssensor und Orientierungssensor seien zusammen als Ortungsvorrichtung bezeichnet. Sie können in einem vom Rest des Ortungssystems baulich getrennten Gehäuse des Ortungssystems untergebracht sein. Vorzugsweise sind Ortungssensor und der Orientierungssensor, also die Ortungsvorrichtung, innerhalb eines gemeinsamen Gehäuses des Ortungssystems positioniert, das über die Untersuchungsoberfläche bewegbar ist, entweder zusammen mit dem Rest des Ortungssystems oder als baulich getrennte Einheit. Die Auswerteeinrichtung umfasst typischerweise ein oder mehrere Prozessoren und ein oder mehrere Speicherbausteine.

Unter einem handgehaltenen Ortungsgerät soll insbesondere verstanden werden, dass zumindest die Ortungsvorrichtung oder eine die Ortungsvorrichtung umfassende Einheit des Ortungsgeräts ohne Zuhilfenahme einer Transportmaschine lediglich mit den Händen, insbesondere mit einer Hand, haltbar gestaltet ist. Vorzugsweise ist das gesamte Ortungsgerät ohne Zuhilfenahme einer Transportmaschine lediglich mit den Händen, insbesondere mit einer Hand, haltbar gestaltet. Typischerweise ist ein handgehaltenes Ortungsgerät so ausgestaltet, dass es während eines Messvorgangs in einer von einem Benutzer des Ortungsgeräts frei ausgeführten Bewegung, insbesondere einer entlang zweier Richtungen freien Bewegung, handgehalten über die Untersuchungsoberfläche wie beispielsweise eine Wandoberfläche bewegt werden kann. Die Masse eines handgehaltenen Ortungsgeräts beträgt beispielsweise weniger als 5 kg, bevorzugt weniger als 3 kg, besonders bevorzugt weniger als 1 kg und ganz besonders bevorzugt weniger als 500 g. Vorzugsweise weist ein handgehaltenes Ortungsgerät ein Gehäuse mit einem Griff und/oder einem Griffbereich auf, mit dem das Ortungsgerät über die Untersuchungsoberfläche geführt, also bewegt werden kann.

Relativpositionsinformationen im Sinne der vorliegenden Erfindung sind Informationen wie beispielsweise Abstandsangaben und/oder Winkelangaben, die es ermöglichen, eine Relativposition zumindest eines Teils des Ortungssystems (beispielsweise der Ortungsvorrichtung des Ortungssystems und/oder des gesamten Ortungssystems) zu dem zu ortenden Objekt zumindest teilweise anzugeben.

Beispielsweise können sie einen gegebenenfalls geschätzten oder gerundeten Abstand zu dem zu ortenden Objekt und/oder eine gegebenenfalls geschätzte Richtung des zu ortenden Objekts, jeweils in Bezugs auf zumindest einen Teil des Ortungssystems, sein oder umfassen. Als ein Teil der Relativpositionsinformationen und/oder zusätzlich zu den Relativpositionsinformationen können auch weitere Informationen durch das Ortungssystem bestimmt werden, beispielsweise eine gegebenenfalls geschätzte Orientierung zumindest eines Teils des Ortungssystems in Bezug auf das zu ortende Objekt (relative Orientierung) durch das Ortungssystem bestimmt werden.

Der Abstand kann beispielsweise durch den Abstand zwischen einem vordefinierten Bezugspunkt des Ortungssystems, beispielsweise der Ortungsvorrichtung oder des gesamten Ortungssystems, und einem vordefinierten Punkt des Objekts, beispielsweise dem Objektzentrum, definiert sein, während sich die relative Orientierung auf eine Orientierung einer vordefinierten Bezugsachse des Ortungssystems in Bezug auf vordefinierte Bezugsachse des zu ortenden Objekts bezieht. Die Richtung des zu ortenden Objekts in Bezug auf das Ortungssystem ist eine Richtung, in der das Objekt relativ zum Ortungssystem liegt, wobei die Richtung über die Orientierung der Verbindungsachse zwischen einem Punkt des Ortungssystems und einem Punkt des Objekts definiert ist. Eine solche Richtung kann also insbesondere in Form eines Vektors angegeben werden, der ausgehend von einem Punkt des Ortungssystems auf einen Punkt des zu ortenden Objekts gerichtet ist.

Im Rahmen dieser Erfindung sind Formulierungen wie beispielsweise Begriffe, Definitionen, Angaben und Feststellungen bezüglich eines Ortungssystems, beispielsweise bezüglich einer Bewegung, einer Position und/oder einer Orientierung des Ortungssystems, so zu verstehen, dass sie sich auch nur auf einen Teil des Ortungssystems, beispielsweise eine Ortungsvorrichtung des Ortungssystems, beziehen können. Dies ist insbesondere deshalb relevant, da ein Ortungssystem aus mehreren räumlich und/oder baulich getrennten Einheiten bestehen kann. So gibt eine relative Orientierung eines Ortungssystems beispielsweise die Orientierung eines zu ortenden Objekts in Bezug auf zumindest einen Teil des Ortungssystems an. Weiterhin ist eine Relativposition durch einen Abstand und eine relative Orientierung des Ortungssystems oder eines Teils des Ortungssystems zu dem zu ortenden Objekt gegeben.

Vorzugsweise beinhalten Relativpositionsinformationen zumindest Informationen hinsichtlich einer Richtung des zu ortenden Objektes in Bezug auf das Ortungssystem. Eine Relativpositionsinformation muss keine exakte Information sein, sie kann z. B. eine Schätzung für einen Abstandswert und/oder einen Winkelwert sein. Messfehler können daher für Relativpositionsinformationen in Kauf genommen werden und/oder es können Rundungen von Messwerten vorgenommen werden, um Relativpositionsinformationen zu erhalten. Insbesondere kann eine Relativpositionsinformation also eine geschätzte (d.h. nur innerhalb eines Fehlerbereichs den realen Werten entsprechende) Richtung und/oder Abstand des Objekts in Bezug zum Ortungssystem oder einem Teil des Ortungssystems sein. Nach Gewinnen von mehr Informationen über die Richtung und/oder den Abstand des Objektes, beispielsweise nach einem Überfahren des Objektes, kann eine Relativpositionsinformation aber auch einer genauen (erkannten) Position und/oder der genauen (erkannten) Richtung des Objektes entsprechen.

Der Ortungssensor ist eingerichtet, ein erstes elektrisches Signal (auch kurz als erstes Signal bezeichnet) bereitzustellen, das sich mit einer Änderung eines Abstands zwischen dem Ortungssystem und dem Objekt ändert. Dabei ist der Abstand zwischen dem Ortungssystem und dem Objekt auf einen beliebigen vordefinierten Bezugspunkt des Ortungssystems, beispielsweise einen Punkt der Ortungsvorrichtung des Ortungssystems, und einen beliebigen vordefinierten Punkt des Objekts, beispielsweise dessen Zentrum (Objektzentrum), bezogen. Ortungssensoren sind prinzipiell geeignet, beispielsweise mittels Auswertung einer elektrischen und/oder magnetischen Feldänderung oder einer Laufzeitänderung einer in ein zu untersuchendes Material ausgestrahlten Strahlung, unter einer Untersuchungsoberfläche befindliche Ortungsobjekte zu detektieren. Bevorzugt kann der Ortungssensor beispielsweise einen Induktivsensor, einen Stromsensor (insbesondere einen Sensor zur Detektion von netzspannungsführenden Leitungen) und/oder einen Kapazitivsensor umfassen oder ein solcher sein. Der Ortungssensor kann auch ein Sensor sein oder umfassen, der für eine Erfassung von Ortungsobjekten mittels elektromagnetischer Strahlung eingerichtet ist, wie insbesondere ein Mikrowellensensor, ein Radarsensor, ein Terahertzsensor, ein Ultrahochfrequenzsensor, ein Röntgensensor, ein Infrarotsensor und/oder ein NMR-Sensor. Ferner kann der Ortungssensor auch einen Schallsensor, beispielsweise einen Ultraschall-Sensor, einen Impact-Echo-Sensor und/oder eine Neutronensonde sein oder umfassen. Bevorzugt ist auch eine Kombination mehrerer, insbesondere auch verschiedenartiger, Sensortypen in einem gemeinsamen Ortungssensor denkbar. Auch der Einsatz mehrerer Ortungssensoren in einem Ortungssystem ist möglich.

Der Orientierungssensor ist eingerichtet, ein zweites elektrisches Signal (auch kurz als zweites Signal bezeichnet) bereitzustellen, das sich mit einer Änderung einer Bewegungsrichtung des Ortungssystems in Bezug auf eine Umgebung des Ortungssystems ändert, also wenn sich eine Orientierung des Ortungssystems in Bezug auf die Umgebung bei einer gleichzeitigen Bewegung des Ortungssystems in Bezug auf die Umgebung ändert. Es ist nicht erforderlich, dass der Orientierungssensor eine Änderung einer Orientierung des Ortungssystems in Bezug auf die Umgebung bei einem Stillstand des Ortungssystems in Bezug auf die Umgebung erfasst. Insbesondere ist es nicht erforderlich, dass eine Änderung der Orientierung des Ortungssystems in Bezug auf die Umgebung bei einem Stillstand des Ortungssystems in Bezug auf die Umgebung zu einer Änderung des zweiten Signals führt. Vorzugsweise ist dies allerdings der Fall. Unter einer Umgebung des Ortungssystems ist im Rahmen der Erfindung eine das Ortungssystem umfassende Umgebung zu verstehen, deren Lage und Orientierung in Bezug auf die Untersuchungsoberfläche zeitlich konstant ist.

Eine Orientierung des Ortungssystems in Bezug auf die Umgebung ist hierbei definiert als eine Orientierung einer vordefinierten Bezugsachse zumindest eines Teils des Ortungssystems, beispielsweise einer Achse der Ortungsvorrichtung des Ortungssystems, in Bezug auf eine vordefinierte und bezüglich der Umgebung zeitlich konstanten Achse. Eine Änderung der Bewegungsrichtung des Ortungssystems hat zur Folge, dass sich ebenfalls eine Orientierung des Ortungssystems in Bezug auf die Umgebung ändert. Da das zu detektierende Objekt vorzugsweise hinsichtlich seiner Orientierung zeitlich konstant ist, ist typischerweise eine Änderung der Orientierung des Ortungssystems in Bezug auf die Umgebung äquivalent zu einer Änderung einer relativen Orientierung in Bezug auf das zu ortende Objekt. Vorzugsweise ist zumindest zu einem Zeitpunkt eine Orientierung des Ortungssystems in Bezug auf die Umgebung bekannt, um eine Kalibrierung des zweitens Signals zu ermöglichen. Eine solche Kalibrierung hinsichtlich der Umgebung ist allerdings nicht zwingend, da die Relativpositionsinformationen keinen Bezug zu der Umgebung nehmen müssen, da sie sich allein auf Relationen zwischen Ortungssystem und Objekt beziehen können. Es ist insbesondere auch denkbar, dass das Ortungssystem zu einem Zeitpunkt, beispielsweise bei einem Aufsetzen auf die Untersuchungsoberfläche einen oder mehrere Referenzwerte für eine Orientierung und/oder eine Position des Ortungssystems festlegt, beispielsweise als einen Referenzwinkel für die Orientierung ein zu dem Zeitpunkt des Aufsetzens bestimmter Winkelwert und/oder als ein Referenzpunkt für die Position einen Punkt der Untersuchungsoberfläche, wobei der oder die Referenzwerte zu späteren Zeitpunkten von dem Ortungssystem zum Vergleich mit der gegenwärtigen Orientierung und/oder gegenwärtigen Position herangezogen werden können.

Der Orientierungssensor kann beispielsweise ein Wegsensor sein, der zur Bestimmung eines durch das Ortungssystem zurückgelegten Weges ausgebildet ist, und/oder ein Bewegungsrichtungssensor sein, der zur Bestimmung einer Bewegungsrichtung des Ortungssystems in Bezug auf eine Umgebung des Ortungssystems ausgebildet ist, und/oder einen Wegsensor und/oder einen Bewegungsrichtungssensor umfassen. Hierbei kann ein Bewegungsrichtungssensor als Orientierungssensor oder als Teil des Orientierungssensors rein zur Messung einer Bewegungsrichtung des Ortungssystems ausgebildet sein. Ein Orientierungssensor kann beispielsweise als ein optischer und/oder mechanischer Wegsensor ausgebildet sein, welcher in einem Betriebszustand eine Bewegung und/oder Drehung mit einer Änderung einer Orientierung des Ortungssystems in Bezug auf eine Umgebung des Ortungssystems erfasst. Vorzugsweise ist das Ortungssystem so gestaltet, dass der Orientierungssensor einen Wegsensor und/oder einen Bewegungsrichtungssensor, insbesondere eine IMU (inertiale Messeinheit), umfasst.

Der Orientierungssensor kann insbesondere auch ein Positionssensor zur Erfassung von Positionsdaten des Ortungssystems bezogen auf die Untersuchungsoberfläche sein oder einen solchen umfassen. Eine Änderung der Bewegungsrichtung des Ortungssystems hat eine entsprechende Änderung einer Position des Ortungssystems zur Folge, aus der die Änderung der Bewegungsrichtung hervorgeht. Aus dem sich mit der Bewegungsrichtung ändernden Signal eines Positionssensors kann also auf die Bewegungsrichtung geschlossen werden. Ein Positionssensor kann insbesondere ein Sensor sein, der dazu vorgesehen ist, eine Feldänderung, eine Laufzeitänderung und/oder eine Phasenlage in ein elektrisches Signal umzuwandeln, um darauf basierend eine gegenwärtige Position des Ortungssystems auf der Untersuchungsoberfläche zu bestimmen. Die gegenwärtige Position kann dabei relativ zu einer früheren Position oder absolut, insbesondere bezogen auf zumindest einen festen Bezugspunkt der Untersuchungsoberfläche, erfasst und als Positionsdaten ausgegeben oder übermittelt werden. Bevorzugt kann der Positionssensor auch eine Orientierung des Positionssensors und somit des Ortungssystems bestimmen. Die Positionsdaten betreffen zumindest Koordinaten in zwei Richtungen, die die Position des Positionssensors auf der Untersuchungsoberfläche bestimmen. Ferner können Positionsdaten auch eine Ausrichtung des Positionssensors bezogen auf die Untersuchungsoberfläche bestimmen.

Die Auswerteeinrichtung ist eingerichtet, die Relativpositionsinformationen bezüglich der Relativposition des Ortungssystems zu dem Objekt unter Berücksichtigung des ersten Signals und des zweiten Signals, beispielsweise durch ein Verrechnen der beiden Signale, zu bestimmen, wobei die Signale typischerweise kabelgebunden von dem Ortungssensor und dem Orientierungssensor an die Auswerteeinrichtung übermittelt werden. Hierbei ist unter einem Bestimmen der Relativpositionsinformationen unter Berücksichtigung des ersten Signals und des zweiten Signals eine Weiterverarbeitung der Signale derart zu verstehen, dass aus beiden Signalen gewonnene Informationen verwendet werden, um die Relativpositionsinformationen zu generieren, wobei ein reines Zuordnen der Signale oder daraus gewonnener Informationen zueinander kein Bestimmen darstellt. Im Fall mehrerer Ortungssensoren kann jeder der mehreren Ortungssensoren ein eigenes erstes Signal bereitstellen, dass an die Auswerteeinrichtung übermittelt und durch diese bei dem Bestimmen der Relativpositionsinformationen berücksichtigt wird. Auch ist es denkbar, dass die Auswerteeinrichtung eingerichtet ist, Relativpositionsinformationen bezüglich der Relativposition des Ortungssystems zu einer Mehrzahl von Objekten unter Berücksichtigung des ersten Signals und des zweiten Signals zu bestimmen. Das Ortungssystem kann also eingesetzt werden, mehrere unter der Untersuchungsoberfläche befindliche Objekte zu orten und deren Relativpositionsinformationen zu bestimmen. Auf das Vorhandensein von mindestens zwei Ortungsobjekten kann durch die Auswerteeinrichtung beispielsweise dann geschlossen werden, wenn bei einer geradlinigen Bewegung des Ortungssystems die Amplitude des ersten Signals zuerst abnimmt und dann wieder ansteigt.

Im Gegensatz zum Stand der Technik werden keine komplexen Sensoren zur Positionsbestimmung benötigt. Die Bestimmung der Relativpositionsinformationen kann beispielsweise unter Verwendung eines Wegsensors mit im Vergleich zum im Stand der Technik verwendeten Sensoren stark reduzierten Anforderungen, also insbesondere größeren Messfehlern, oder durch einen Bewegungsrichtungssensor zur alleinigen Messung einer Bewegungsrichtung erfolgen. Beispielsweise kann ein Orientierungssensor durch Räder oder eine Kugel in Kombination mit einer Vorrichtung zur Bestimmung von deren Bewegungen, durch Dehnungsmessstreifen zur Messung einer Verformung, beispielsweise von flexibel gelagerten Gleitern, durch eine Vorrichtung zur Korrelation von Bildern des Untergrundes (optisches Tracking) und/oder durch eine Vorrichtung zum Messen der Geschwindigkeit beispielsweise mittels Doppler-Radar oder Laser-Interferometrie umgesetzt werden. Weiterhin ist es auch denkbar, dass ein Orientierungssensor eine Vorrichtung zur Durchführung von SLAM (Simultane Positionsbestimmung und Kartierung) und/oder eine IMU (inertiale Messeinheit) ist oder umfasst.

Besonders vorteilhaft ist es, wenn die Auswerteeinrichtung so eingerichtet, eine Änderung des ersten Signals, vorzugsweise eine Änderung einer Amplitude des ersten Signals, zu bestimmen. In so einem Fall ist die Auswerteeinrichtung nicht auf Absolutwerte des ersten Signals angewiesen, um die Relativpositionsinformationen zu bestimmen. Hierbei kann die Änderung insbesondere eine zeitliche Änderung sein. Die Änderung kann also beispielsweise in Form eines Gradienten und/oder einer Steigung gegeben sein, beispielsweise bezogen auf die Zeit, wenn das erste Signal in Abhängigkeit von der Zeit betrachtet wird. Durch eine Betrachtung der zeitlichen Änderung des ersten Signals bei einem Bewegen des Ortungssystems kann festgestellt werden, ob ein Annähern durch das Ortungssystem an das Objekt erfolgt oder ein Entfernen von dem Objekt, wobei allein durch das erste Signal typischerweise nicht ersichtlich ist, wie die Bewegungsrichtung des Ortungssystems aussieht. In Kombination mit dem zweiten Signal, aus dem sich zumindest Schätzwerte hinsichtlich der Richtung der Bewegung des Ortungssystems bestimmen lassen, lässt sich allerdings dann zumindest ein Schätzwert bestimmen, in welcher Richtung sich das Objekt in Bezug zum Ortungssystem befindet, d.h. im Fall welcher Bewegungsrichtung ein Annähern an das Objekt erfolgt beziehungsweise ein Entfernen erfolgt. In einer besonders einfach umzusetzenden Ausführungsform der Erfindung wird bei einem festgestellten Annähern an das Objekt vereinfachend durch die Auswerteeinrichtung gefolgert, dass sich das Objekt in Richtung der momentan auf Basis des zweiten Signals geschätzten Bewegungsrichtung befindet. Andersherum wird bei einem festgestellten Entfernen von dem Objekt vereinfachend gefolgert, dass das Objekt entgegengesetzt der geschätzten Bewegungsrichtung liegt. Bei einer solchen binären Positionsangabe (Objekt liegt in/entgegensetzt der Bewegungsrichtung) handelt es sich um Relativpositionsinformationen.

Vorzugsweise kann die Auswerteeinrichtung eingerichtet sein, zeitliche Änderungen des zweiten Signals, vorzugsweise eine zeitliche Änderung einer Amplitude des zweiten Signals, zu bestimmen. Die Auswerteeinrichtung kann insbesondere eingerichtet sein, dass das Bestimmen der Relativpositionsinformationen bezüglich der Relativposition des Ortungssystems zu dem Objekt unter Berücksichtigung des ersten Signals und des zweiten Signals dadurch erfolgt, dass die Auswerteeinrichtung zeitliche Änderungen sowohl des ersten Signals als auch des zweiten Signals bestimmt und miteinander verrechnet. Dies ist besonders vorteilhaft, da ein Benutzer eines erfindungsgemäßen Ortungssystems, insbesondere im Fall eines handgehaltenen Ortungsgerätes, dieses typischerweise nicht perfekt entlang einer Horizontalen auf der Untersuchungsoberfläche entlangführt, sondern ungewollt beispielsweise in kurvenförmigen und/oder wellenförmigen Bahnen. Diese Bahnänderungen führen zu fortwährenden Änderungen der Bewegungsrichtung und damit auch der Orientierung des Ortungssystems in Bezug auf die Umgebung, was typischerweise eine Änderung sowohl des ersten Signals als auch des zweiten Signals zur Folge hat. Aus den Änderungen beider Signale kann dann durch die Auswerteeinrichtung auf die ungefähre Richtung geschlossen werden kann, in der das Objekt zu einem bestimmten Zeitpunkt in Bezug auf das Ortungssystem liegt. Eine solche Betrachtung und Verrechnung der zeitlichen Änderungen beider Signale ermöglicht eine präzisere Bestimmung der Relativposition des Objektes als bei einer Verwendung eines gegenwärtigen Absolutwertes für die Bewegungsrichtung des Ortungssystems, da durch die Berücksichtigung der zeitlichen Änderungen des zweiten Signals (verursacht durch vom Benutzer ungewollte Abweichungen von einer geradlinigen Bewegung) unterschieden werden kann zwischen Fällen, bei denen sich das Objekt genau in Richtung der gegenwärtigen Bewegungsrichtung befindet oder seitlich dieser liegt.

Vorteilhafterweise umfasst das Ortungssystem eine Ausgabeeinheit, die eingerichtet ist, die bestimmten Relativpositionsinformationen zu dem Objekt einem Benutzer des Ortungssystems vorzugsweise optisch zu übermitteln, also anzuzeigen, beispielsweise in welcher Richtung sich das Objekt, insbesondere dessen Objektzentrum befindet. Die Relativpositionsinformationen sind vorteilhaft für den Benutzer, um das Objektzentrum schnell zu finden. Elemente der Ausgabeeinheit, die unmittelbar der Übermittlung von Relativpositionsinformationen an den Benutzer des Ortungssystems dienen, beispielsweise Leuchtmittel der Ausgabeeinheit, seien im Rahmen dieser Erfindung als Anzeigeelemente bezeichnet.

Eine Übermittlung der Relativpositionsinformationen an den Benutzer kann optisch beispielsweise unter Verwendung von Leuchtmitteln wie LEDs (Leuchtdioden), Leuchtpfeilen (also Leuchtanzeigen in Pfeilform oder ähnlicher Form) und/oder eines Bildschirms erfolgen. Beispielsweise kann eine ungefähre Richtung, in der das Objekt geschätzt liegt, mit zwei LEDs und/oder Leuchtpfeilen angezeigt werden, die beispielsweise den Möglichkeiten links und rechts entsprechen. Mit vier LEDs und/oder Leuchtpfeilen kann zusätzlich eine weitere Richtungsmöglichkeit (z.B. oben und unten) angezeigt werden. Mit weiteren LEDs und/oder Leuchtpfeilen und/oder die zeitgleiche Aktivierung mehrere LEDs und/oder Leichtpfeile kann die angezeigte Richtung weiter präzisiert werden. Leuchtpfeile können hierbei auf verschiedene Arten realisiert werden, beispielsweise mit LEDs und/oder mit Lichtleitern und/oder dargestellt auf einem Bildschirm. Weiterhin können einem Benutzer nicht nur Richtungsangaben, sondern auch Abstandsangaben optisch zugänglich gemacht werden. Dies kann beispielsweise dadurch erfolgen, dass die Intensität der Leuchtpfeile in Abhängigkeit vom Abstand des Ortungssystems zum Objekt abhängt und/oder dass zusätzliche LEDs bei Annäherung an das Objekt aktiviert werden. Im Fall von Leuchtpfeilen ist es auch denkbar, dass mehrere oder alle Leuchtpfeile leuchtend geschaltet werden, sobald der Abstand Ortungssystem zum Objekt einen bestimmten Wert zumindest in Bezug auf eine Achse (also links-rechts, oben-unten) unterschreitet. Eine besonders einfache Variante der optischen Übermittlung von Relativpositionsinformationen an den Benutzer kann dadurch erfolgen, dass eine ungefähre Position des zu detektierenden Objekts relativ zur Position des Ortungssystems mit Hilfe von drei Leuchtmitteln, zum Beispiel LEDs, erfolgt: Das erste Leuchtmittel wird dann aktiviert, wenn sich das Objekt unterhalb oder in einem bestimmten Umkreis des Ortungssystems befindet. Das zweite Leuchtmittel wird dann aktiviert, wenn sich das Objekt links von dem Ortungssystem befindet. Im Fall, dass das Objekt rechts von dem Ortungssystem ist, wird schließlich das dritte Leuchtmittel aktiviert. Mit weiteren Leuchtmitteln sind präzisiere Positionsangaben und/oder die Angabe von weiteren Richtungen möglich.

Allgemein kann das Anzeigen von Relativpositionsinformationen durch die Ausgabeeinheit auch von Bedingungen abhängig gemacht werden, wie beispielsweise von Werten der Sensoren und/oder vom Vorhandensein von Anzeigeelementen der Ausgabeeinheit. So ist es denkbar, dass ein Anzeigeelement zur Anzeige der Richtung, in der sich das Objekt befindet, nur dann aktiviert wird, wenn überhaupt ein Objekt detektiert wurde. Auch könnten alle Anzeigeelemente deaktiviert werden, wenn diese allein der Widergabe einer Position links oder rechts des Ortungssystems entsprechen, wenn sich das Objekt im Wesentlichen oberhalb oder unterhalb des Ortungssystems befindet und daher eine Verwendung der Anzeigeelemente für links/rechts missverständlich für einen Benutzer des Ortungssystems sein könnte.

Alternativ oder zusätzlich sind auch akustische wie Signaltöne und/oder haptische Signale wie Vibrationen denkbar. Entsprechend kann die Ausgabeeinheit insbesondere eine LED, einen Bildschirm, einen Lautsprecher und/oder Vibrationsgenerator umfassen. Insbesondere kann die Ausgabeeinheit den Benutzer bei einer Bewegung des Ortungssystems durch den Benutzer darüber informieren, ob er das Ortungssystem in Richtung des Objektes bewegt. Auch kann der Benutzer durch das Ortungssystem direkt aufgefordert werden, das Ortungssystem in Richtung des Objektes, auf das Objekt und/oder über das Objekt zu bewegen. Dies ermöglicht es dem Ortungssystem typischerweise, das Objekt noch genauer zu erfassen.

Gemäß einem zweiten Aspekt der Erfindung wird ein Verfahren zur Bestimmung von Relativpositionsinformationen mittels eines Ortungssystems, vorzugsweise wie hier beschrieben, bezüglich einer Relativposition des Ortungssystems zu einem unter einer Untersuchungsoberfläche befindlichen zu ortenden Objekt vorgeschlagen. Dieses Verfahren umfasst ein Bereitstellen eines ersten Signals durch einen Ortungssensor des Ortungssystems, wobei sich das erste Signal mit einer Änderung eines Abstands zwischen dem Ortungssystem und dem Objekt ändert, ein Bereitstellen eines zweiten Signals durch einen Orientierungssensor des Ortungssystems, wobei sich das zweite Signal mit einer Änderung einer Bewegungsrichtung des Ortungssystems zu einer Umgebung des Ortungssystems ändert und ein Bestimmen der Relativpositionsinformationen unter Berücksichtigung des ersten Signals und des zweiten Signals durch eine Auswerteeinrichtung des Ortungssystems erfolgt. Hierbei kann das Bestimmen ein Verrechnen der Signale mit einer vorherigen Signalverarbeitung und/oder Signalaufbereitung eines oder beider der zwei Signale sein oder umfassen.

Vorzugsweise wird zumindest ein Teil des Ortungssystems, das den Ortungssensor und den Orientierungssensor (also die Ortungsvorrichtung) umfasst, oder das gesamte Ortungssystem zu dem Bestimmen der Relativpositionsinformationen mittels des Ortungssystems automatisiert oder durch einen Benutzer über die Untersuchungsoberfläche bewegt, wodurch sich das erste und das zweite Signal ändern. Vorzugsweise umfasst das Verfahren weiterhin ein Übermitteln der bestimmten Relativpositionsinformationen an einen Benutzer des Ortungssystems durch eine Ausgabeeinheit des Ortungssystems, wobei das Übermitteln vorzugsweise optisch, beispielsweise mittels Leuchtmitteln wie LEDs, Leuchtpfeilen und/oder einem Bildschirm, erfolgt. Es ist somit beispielsweise denkbar, dass der Benutzer das Ortungssystem oder dessen Ortungsvorrichtung über eine Wandoberfläche als Untersuchungsoberfläche bewegt um ein verborgenes Objekt wie eine elektrische Leitung oder ein Rohr zu detektieren. Die Auswerteeinrichtung bestimmt basierend auf dem ersten Signal und dem zweiten Signal einen Schätzwert für die Richtung des Objekts und zeigt diesen dem Benutzer beispielsweise mittels eines Leuchtpfeils an. Diese Richtung entspricht einer Richtung, in welcher Richtung die Amplitude des ersten Signals ansteigt. Die Auswerteeinrichtung kann aber auch so ausgestaltet sein, dass aus den zwei Signalen sowohl Abstand und Richtung des Objektes ermittelt werden und diese auf einem Bildschirm des Ortungssystems dem Benutzer angezeigt werden.

Weiterhin kann das Verfahren ein Ermitteln eines oder mehrerer Offsetwerte für das erste Signal und/oder für das zweite Signal umfassen und das Bestimmen der Relativpositionsinformationen ein Entfernen eines Offsets für das erste und/oder das zweite Signal unter Berücksichtigung des einen oder der mehreren ermittelten Offsetwerte umfassen. Ein solches Ermitteln von Offsetwerten ist beispielsweise im Fall, dass der Orientierungssensor eine IMU ist oder umfasst, vorteilhaft: Über die Verwendung einer entsprechenden Software (einer Sensor Fusion Library) ist eine Schätzung einer Orientierung der IMU möglich, wobei allerdings Werte für eine Position der IMU einer großen Drift unterworfen sind. Der Grund hierfür ist, dass eine IMU typischerweise Beschleunigungswerte in alle drei Raumrichtungen benutzt, um aus diesen Werte für eine Position zu bestimmen, wofür folglich ein zweimaliges Integrieren erforderlich ist. Liegen Offset-Fehler, also nicht gewünschte Offsetwerte, in den Beschleunigungswerten vor, führen diese zu stark verfälschten Positionswerten. Für die Bestimmung einer Bewegungsrichtung, die typischerweise über ein einmaliges Integrieren der Beschleunigungswerte erfolgt, sind ebenfalls Offset-Fehler problematisch. Daher ist ein Ermitteln und Entfernen von Offsetwerten insbesondere für kleine Beschleunigungen und Geschwindigkeiten wichtig.

Vorteilhafterweise beinhaltet das zweite Signal Beschleunigungswerte für das Ortungssystem und das Ermitteln des einen oder der mehreren Offsetwerte erfolgt für das zweite Signal während eines Bewegungsstillstands des Ortungssystems. Ein solcher Stillstand hat sich als die geeignetste Betriebsphase hierfür herausgestellt. Im Fall einer IMU kann ein solcher Stillstand mit Hilfe von durch die IMU erfassten Beschleunigungswerte und/oder Drehraten ermittelt werden. Insbesondere eine ermittelte Drehrate der Ebene, die senkrecht zur Untersuchungsoberfläche steht, auf der das Ortungssystems verfahren wird, ist besonders aussagekräftig zur Bestimmung, ob das Ortungssystem ruht oder sich in Bewegung befindet.

Des Weiteren kann das Bestimmen der Relativpositionsinformationen ein Berücksichtigen der Änderung des ersten Signals und/oder des zweiten Signals umfassen, wobei vorzugsweise die Änderung des ersten Signals und/oder des zweiten Signals eine Änderung einer Amplitude des ersten Signals und/oder des zweiten Signals umfasst oder ist.

### Vorteile der Erfindung

Die Erfindung beschreibt einen Ansatz für ein Ortungssystem, insbesondere ein handgehaltenes Ortungsgerät, zur Ortung von einem unter einer Untersuchungsoberfläche wie einer Wandoberfläche befindlichen zu ortenden Objekt, in dem entsprechende Relativpositionsinformationen unter Berücksichtigung der elektrischen Signale eines Ortungssensors und eines Orientierungssensors durch eine Auswerteeinrichtung bestimmt werden. Die grundlegende Idee besteht dabei darin, die durch die beiden Sensoren gewonnenen Informationen so zu verwenden, dass das Ortungsergebnis für einen Benutzer verbessert wird, und Relativpositionsinformationen wie ein Abstand des Ortungssystems zum zu ortenden Objekt und/oder eine relative Orientierung des Ortungssystems in Bezug auf das zu ortende Objekt und/oder eine Richtung des zu ortenden Objekts in Bezug auf das Ortungssystem angezeigt werden können. Etwaige Unzulänglichkeiten einer oder beider der Sensoren können hierdurch zumindest teilweise ausgeglichen werden.

Dieser Ansatz ermöglicht somit ein vorteilhaftes Vorgehen zur Ortung von unter einer Untersuchungsoberfläche befindlichen Objekten, da nur reduzierte Anforderungen an die verwendeten Sensoren, insbesondere an den verwendeten Orientierungssensor gestellt werden müssen. Für eine Umsetzung der Erfindung wird der Orientierungssensor allein für eine grobe Bestimmung der Bewegungsrichtung des Ortungssystems benötigt, eine exakte Positionsbestimmung und damit einhergehend eine aufwendige Sensorik sind nicht erforderlich.

Das Ortungssystem kann einem Benutzer eines erfindungsgemäßen Ortungssystems eine ungefähre Schätzung hinsichtlich des Abstands und/oder der Richtung des zu ortenden Objekts durch das Ortungssystem übermitteln, beispielsweise unter Verwendung von Leuchtmitteln wie LEDs und/oder Leuchtpfeilen, in welcher Richtung sich ein verborgenes Objekt befindet. Für eine zügige Lokalisierung des Zentrums des Objektes durch den Benutzer ist dies oft ausreichend.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Ansicht eines beispielhaften erfindungsgemäßen Ortungssystems;
- Figur 2: ein schematisches Flussdiagramm zur Erläuterung eines beispielhaften erfindungsgemäßen Verfahrens zur Bestimmung von Relativpositionsinformationen; und
- Figuren 3A, 3B: schematische Darstellungen zur Veranschaulichung der Funktionsweise eines beispielhaften erfindungsgemäßen Ortungssystems und eines beispielhaften erfindungsgemäßen Verfahrens.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

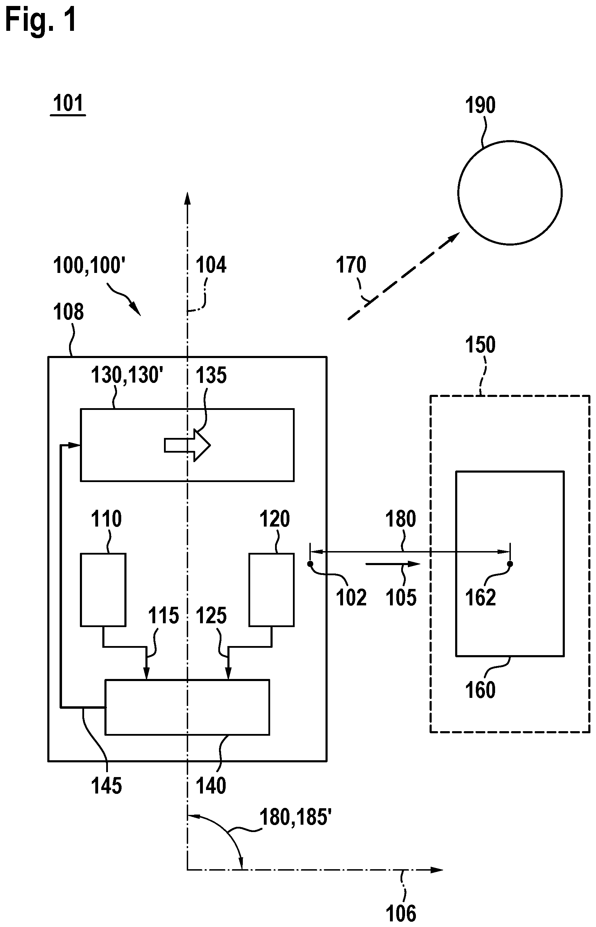

Figur 1 zeigt eine schematische Ansicht eines beispielhaften erfindungsgemäßen Ortungssystems 100. Hierbei handelt es sich um ein handgehaltenes Ortungsgerät 100' mit einem Bildschirm 130' als Teil einer Ausgabeeinheit 130, wobei sich das Ortungssystem 100 in einer Umgebung 101 befindet. Weiterhin umfasst das Ortungssystem 100 einen Ortungssensor 110, einen Orientierungssensor 120 und eine Auswerteeinrichtung 140, wobei die Sensoren 110, 120 mittels Kabeln 115, 125 zur elektrischen Signalübertragung mit der Auswerteeinrichtung 140 verbunden sind. Die Auswerteeinrichtung 140 wiederum ist mittels eines Kabels 145 zur elektrischen Signalübertragung mit der Ausgabeeinheit 130 verbunden. Das Ortungssystem 100 umfasst ein Gehäuse 108, dass diese Komponenten 110, 115, 120, 125, 130, 140, 145 zumindest teilweise umschließt und in das der Bildschirm 130' eingelassen ist.

Das Ortungssystem 100 wird zum Orten eines unter einer Untersuchungsoberfläche 150 befindlichen zu ortenden Objekts 160 durch einen menschlichen Benutzer 190 über die Untersuchungsoberfläche 150 geführt. Das Ortungssystem 100 kann Relativpositionsinformationen bezüglich einer Relativpositionen des Ortungssystems 100 zu dem zu ortenden Objekt 160 bestimmen. Hierfür dienen der Ortungssensor 110 und der Orientierungssensor 120 in Kombination mit der Auswerteeinrichtung 140, wobei der Ortungssensor 110 ein erstes Signal bereitstellt, das sich mit einer Änderung eines Abstands 180 zwischen dem Ortungssystem 100 und dem Objekt 160 ändert. Hierbei bezieht sich der Abstand 180 auf den Abstand zwischen einem Bezugspunkt 102 des Ortungssystems 100 und dem Objektzentrum 162. Der Orientierungssensor 120 ist eingerichtet, ein zweites Signal bereitzustellen, das sich mit einer Änderung einer Bewegungsrichtung 105 des Ortungssystems 100 zu der Umgebung 101 des Ortungssystems 100 ändert. Denkbar ist beispielsweise, dass der Orientierungssensor 120 eine Orientierung 185 erfasst, beispielsweise über eine Ermittlung eines ungefähren Werts für einen Winkel 185' zwischen einer Bezugsachse 104 des Ortungssystems 100 und einer bezüglich der Umgebung 101 zeitlich konstanten Achse 106. Der Winkel 185' ist damit unabhängig von der Lage des Objekts 160.

Der Winkel 185' ermöglicht bei Bewegung des Ortungssystems 100 über die Untersuchungsoberfläche 150 eine Aussage über die Bewegungsrichtung 105 des Ortungssystems 100, vorausgesetzt, das Ortungssystem 100 wird so bewegt, dass eine im Wesentlichen konstante Ausrichtung des Ortungssystems 100 hinsichtlich seiner Bewegungsrichtung 105 existiert. Zusammen mit der Änderung des Abstands 180 erlaubt der Winkel 185' eine Aussage darüber, ob bei einem Bewegen in Bewegungsrichtung 105 eine Annäherung an das Objekt 160 erfolgt oder dies ein Entfernen von dem Objekt 160 zur Folge hat, d.h. in welcher Richtung sich das Objekt 160 zumindest grob befindet. Die so während der Bewegung der Ortungssystems 100 gewonnenen Informationen, also die Lage des Objekts 160 grob in Bewegungsrichtung 105 oder entgegensetzt der Bewegungsrichtung 105, stellen Relativpositionsinformationen dar, die durch die Auswerteeinrichtung 140 unter Verwendung des ersten Signals und des zweiten Signals bestimmt werden. Ebenfalls vorstellbar ist es aber beispielsweise, dass der Orientierungssensor 120 als Wegsensor umgesetzt wird, dessen Signal zumindest ungefähre Informationen hinsichtlich eines zurückgelegten Wegs auf der die Untersuchungsoberfläche 150 ermöglicht, so dass aus diesen Informationen auf Änderungen in der Orientierung 185 des Ortungssystem 100 und die Bewegungsrichtung 105 geschlossen werden kann. Äquivalent zum oben beschriebenen Fall lässt sich dann auch hier bestimmen, ob sich das Objekt 160 grob in Bewegungsrichtung 105 oder entgegengesetzt der Bewegungsrichtung 105 befindet.

Die so gewonnenen Relativpositionsinformationen können nun zum Beispiel mittels des Bildschirms 130' der Ausgabeeinheit 130, beispielsweise in Form von auf das Ortungssystem 100 bezogen entweder nach links oder rechts zeigenden Leuchtpfeilen 135, angezeigt und damit an den Benutzer 190 des Ortungssystems 100 optisch übermittelt werden (schematisch dargestellt durch einen Pfeil 170).

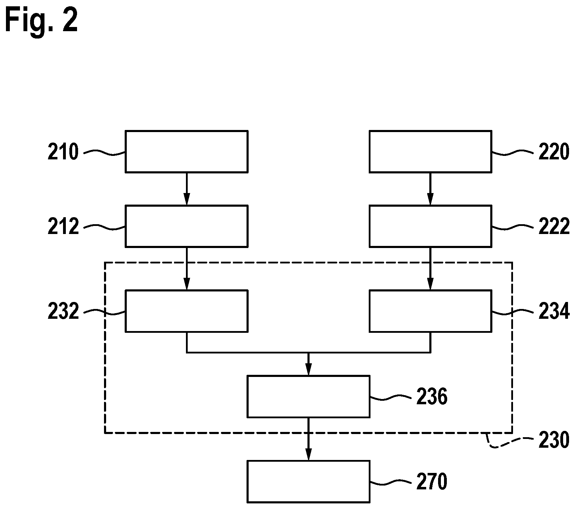

Figur 2 zeigt ein schematisches Flussdiagramm zur Erläuterung eines beispielhaften erfindungsgemäßen Verfahrens zur Bestimmung von Relativpositionsinformationen mittels eines Ortungssystems 100, beispielsweise wie in Figur 1 dargestellt, bezüglich einer Relativposition des Ortungssystems 100 zu einem unter einer Untersuchungsoberfläche 150 befindlichen zu ortenden Objekt 160. Dieses Verfahren umfasst ein Bereitstellen 210 eines ersten Signals durch einen Ortungssensor 110 des Ortungssystems 100, wobei sich das erste Signal mit einer Änderung eines Abstands 180 zwischen dem Ortungssensor 110 und dem Objekt 160 ändert, und ein Bereitstellen 220 eines zweiten Signals durch einen Orientierungssensor 120 des Ortungssystems 100, wobei sich das zweite Signal mit einer Änderung einer Bewegungsrichtung 105 des Ortungssystems 100 zu einer Umgebung 101 des Ortungssystems 100 ändert. Optional erfolgt weiterhin ein Ermitteln 212, 222 eines oder mehrerer Offsetwerte für das erste Signal und/oder für das zweite Signal, um Fehler bei der Signalverarbeitung zu vermeiden. Die Ermittlung der Offsetwerte kann vorteilhafterweise während eines Bewegungsstillstands des Ortungssystems 100 erfolgen.

Nach dem Ermitteln 212, 222 der Offsetwerte kann unter fortwährendem Erfassen des ersten und des zweiten Signals ein Bestimmen 230 der Relativpositionsinformationen erfolgen. Dieses umfasst ein Entfernen 232, 234 eines Offsets für das erste und/oder das zweite Signal unter Berücksichtigung des einen oder der mehreren ermittelten Offsetwerte. Anschließend erfolgt das eigentliche Bestimmen der Relativpositionsinformationen unter Berücksichtigung des ersten Signals und des zweiten Signals. Dies kann beispielsweise durch ein Verrechnen 236 der beiden Signale erfolgen und insbesondere dadurch, dass die Auswerteeinrichtung 140 zeitliche Änderungen sowohl des ersten Signals als auch des zweiten Signals bestimmt und zur Gewinnung der Relativpositionsinformationen miteinander verrechnet. Vorzugsweise wird herbei eine zeitliche Änderung einer Amplitude des ersten Signals und/oder eine zeitliche Änderung einer Amplitude des zweiten Signals betrachtet.

Schließlich werden die bestimmten Relativpositionsinformationen an einen Benutzer 190 des Ortungssystems 100 durch eine Ausgabeeinheit 130 des Ortungssystems 100 in Schritt 270 übermittelt, wobei dieses Übermitteln 270 vorzugsweise optisch, also beispielsweise mittels Leuchtpfeilen 135 und/oder eines Bildschirms 130' erfolgt.

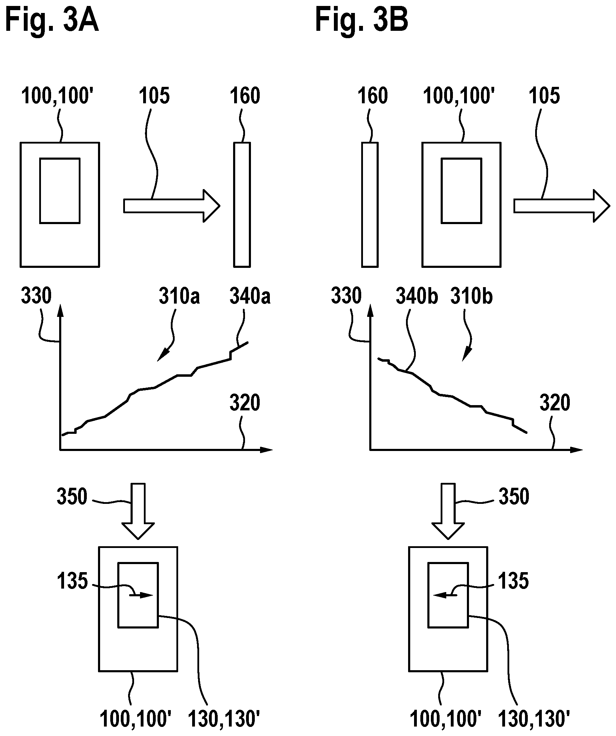

Die Figuren 3A und 3B schließlich zeigen Diagramme zur weiteren Veranschaulichung der Funktionsweise des beispielhaften erfindungsgemäßen Ortungssystems 100 aus Figur 1 und eines beispielhaften erfindungsgemäßen Verfahrens.

Die Figur 3A zeigt im oberen Drittel eine Situation wie bereits in Figur 1 dargestellt. Das Ortungssystem 100, ein handgehaltenes Ortungsgerät 100', wird auf das unter einer Untersuchungsoberfläche 150 befindliche zu ortende Objekt 160 zubewegt. Hierbei ist in der Figur 3A die Bewegungsrichtung 105 durch einen Pfeil veranschaulicht.

Unterhalb dieser Darstellung ist in der Figur 3A ein Diagramm 310a gezeigt, dass die Amplitude des ersten Signals des Ortungssensors 110 (y-Achse 330) aufgetragen gegen die Zeit (x-Achse 320) darstellt. Wie zu sehen ist, ist der Verlauf der draus resultierenden Kurve 340a ansteigend, d.h. die Amplitude des ersten Signals wird größer mit der Zeit. Ein Bestimmen einer zumindest groben Aussage über die Bewegungsrichtung 105 kann mit Hilfe des zweiten Signals des Orientierungssensors 120 erfolgen.

Auf Grundlage dieser Informationen, also unter Berücksichtigung des ersten Signals und des zweiten Signals der beiden Sensoren 110 und 120, verdeutlicht durch Pfeil 350, können folglich durch die Auswerteeinrichtung 140 Relativpositionsinformationen bezüglich der Relativposition des Ortungssystems 100 zu dem Objekt 160 bestimmt werden: Aus dem ansteigenden Verlauf der Kurve 340a lässt sich schließen, dass in Bewegungsrichtung 105 eine Annäherung an das Objekt 160 erfolgt. Durch das Wissen über die ungefähre Bewegungsrichtung 105 auf Grund des Signals des Orientierungssensor 120, nämlich, dass diese bezogen auf die Darstellung der Figur 3A von links nach rechts erfolgt, kann weiterhin gefolgert werden, dass sich auch das Objekt 160 rechtsseitig des handgehaltenen Ortungsgeräts 100' befinden muss. Die Ausgabeeinheit 130 des handgehaltenen Ortungsgeräts 100' kann nun beispielsweise einen Leuchtpfeil 135 einblenden, beispielsweise mittels eines Bildschirms 130' der Ausgabeeinheit 130, der in die ungefähre vermutete Richtung des Objekts 160 zeigt, und hierdurch die durch die Auswerteeinrichtung 140 bestimmten Relativpositionsinformationen an einen Benutzer 190 des handgehaltenen Ortungsgeräts 100' übermitteln.

Andersherum zeigt Figur 3B die Situation bei einem abfallenden zeitlichen Verlauf der Amplitude des Signals des Ortungssensors 110. Die entsprechende Kurve 340b ist in Diagramm 310b gezeigt. Das Bestimmen 230 der Relativpositionsinformationen unter Berücksichtigung des ersten Signals und des zweiten Signals erfolgt analog zu dem Fall der Figur 3A: Aus dem Abfallen der Amplitude des ersten Signals kann durch die Auswerteeinrichtung 140 geschlossen werden, dass sich in diesem Fall das handgehaltenen Ortungsgerät 100' bei Bewegung in Bewegungsrichtung 105 von dem Objekt 160 entfernt. Auf Grund der Kenntnis über die Bewegungsrichtung 105 kann weiterhin geschlossen werden, dass sich das Objekt 160 bezogen auf die Darstellung der Figur 3B linksseitig des handgehaltenen Ortungsgeräts 100' befindet. Erneut können diese Relativpositionsinformationen einem Benutzer 190 mittels der Ausgabeeinheit 130 durch einen Leuchtpfeil 135 übermittelt werden, der in diesem Fall entgegengesetzt der Richtung des Leuchtpfeils 135 der Figur 3A zeigt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Ortungssystem (100), insbesondere handgehaltenes Ortungsgerät (100'), zur Bestimmung von Relativpositionsinformationen bezüglich einer Relativposition des Ortungssystems (100) zu einem unter einer Untersuchungsoberfläche (150) befindlichen zu ortenden Objekt (160),
wobei das Ortungssystem (100) einen Ortungssensor (110), einen Orientierungssensor (120) und eine Auswerteeinrichtung (140) aufweist,
wobei der Ortungssensor (110) eingerichtet ist, ein erstes Signal bereitzustellen, das sich mit einer Änderung eines Abstands (180) zwischen dem Ortungssystem (100) und dem Objekt (160) ändert, und
der Orientierungssensor (120) eingerichtet ist, ein zweites Signal bereitzustellen, das sich mit einer Änderung einer Bewegungsrichtung (105) des Ortungssystems (100) zu einer Umgebung (101) des Ortungssystems (100) ändert, wobei die Auswerteeinrichtung (140) eingerichtet ist, die Relativpositionsinformationen bezüglich der Relativposition des Ortungssystems (100) zu dem Objekt (160) unter Berücksichtigung des ersten Signals und des zweiten Signals zu bestimmen.

2. Ortungssystem (100) nach Anspruch 1, wobei die Auswerteeinrichtung (140) eingerichtet ist, eine Änderung des ersten Signals und/oder des zweiten Signals, vorzugsweise eine Änderung einer Amplitude des ersten Signals und/oder des zweiten Signals, zu bestimmen.

3. Ortungssystem (100) nach einem der vorhergehenden Ansprüche, wobei der Orientierungssensor (120) einen Wegsensor und/oder einen Bewegungsrichtungssensor, insbesondere eine IMU, umfasst.

4. Ortungssystem (100) nach einem der vorhergehenden Ansprüche, wobei das Ortungssystem (100) eine Ausgabeeinheit (130) umfasst, die eingerichtet ist, die bestimmten Relativpositionsinformationen zu dem Objekt (160) einem Benutzer (190) des Ortungssystems (100) vorzugsweise optisch zu übermitteln (170, 270).

5. Ortungssystem (100) nach Anspruch 4, wobei die Ausgabeeinheit (130) eine LED, einen Bildschirm (130'), einen Lautsprecher und/oder einen Vibrationsgenerator umfasst.

6. Verfahren zur Bestimmung von Relativpositionsinformationen mittels eines Ortungssystems (100), vorzugsweise nach einem der Ansprüche 1 bis 5, bezüglich einer Relativposition des Ortungssystems (100) zu einem unter einer Untersuchungsoberfläche (150) befindlichen zu ortenden Objekt (160) umfassend die folgenden Schritte:
a. Bereitstellen (210) eines ersten Signals durch einen Ortungssensor (110) des Ortungssystems (100), wobei sich das erste Signal mit einer Änderung eines Abstands (180) zwischen dem Ortungssensor (110) und dem Objekt (160) ändert;
b. Bereitstellen (220) eines zweiten Signals durch einen Orientierungssensor (120) des Ortungssystems (100), wobei sich das zweite Signal mit einer Änderung einer Bewegungsrichtung (105) des Ortungssystems (100) zu einer Umgebung (101) des Ortungssystems (100) ändert; und
c. Bestimmen (230) der Relativpositionsinformationen unter Berücksichtigung des ersten Signals und des zweiten Signals durch eine Auswerteeinrichtung (140) des Ortungssystems (100).

7. Verfahren nach Anspruch 6, wobei das Verfahren ein Übermitteln (170, 270) der bestimmten Relativpositionsinformationen an einen Benutzer (190) des Ortungssystems (100) durch eine Ausgabeeinheit (130) des Ortungssystems (100) umfasst, wobei das Übermitteln (170, 270) vorzugsweise optisch erfolgt.

8. Verfahren nach einem der Ansprüche 6 oder 7, wobei das Verfahren ein Ermitteln (212, 222) eines oder mehrerer Offsetwerte für das erste Signal und/oder für das zweite Signal umfasst und das Bestimmen (230) der Relativpositionsinformationen ein Entfernen (232, 234) eines Offsets für das erste und/oder das zweite Signal unter Berücksichtigung des einen oder der mehreren ermittelten Offsetwerte umfasst.

9. Verfahren nach Anspruch 8, wobei das zweite Signal Beschleunigungswerte für das Ortungssystem (100) beinhaltet und das Ermitteln (222) des einen oder der mehreren Offsetwerte für das zweite Signal während eines Bewegungsstillstands des Ortungssystems (100) erfolgt.

10. Verfahren nach einem der Ansprüche 6 bis 9, wobei das Bestimmen (230) der Relativpositionsinformationen ein Berücksichtigen der Änderung des ersten Signals und/oder des zweiten Signals umfasst, wobei vorzugsweise die Änderung des ersten Signals und/oder des zweiten Signals eine Änderung einer Amplitude des ersten Signals und/oder des zweiten Signals umfasst oder ist.
